# EUROPÄISCHE PATENTSCHRIFT

(11) **EP 0 480 153 B1**
(45) Veröffentlichungstag und Bekanntmachung des Hinweises auf die Patenterteilung: **22.05.1996**
(21) Anmeldenummer: 91114322.0
(22) Anmeldetag: 27.08.1991
(51) Int. Cl.: B29C 70/78, B29C 33/14, B29C 43/18, B29C 43/34, B29B 11/08, B29C 31/04

(54) **Verfahren und Vorrichtung zum Herstellen eines Kunststofformteils**
Method and apparatus for manufacturing a moulded plastics article
Procédé et appareil pour la fabrication d'un objet moulé en matière plastique

(30) Priorität: 01.10.1990 DE 4030964
(43) Veröffentlichungstag der Anmeldung: 15.04.1992
(73) Patentinhaber: Gebr. Happich GmbH, D-42097 Wuppertal (DE); SCHADE KG, D-58815 Plettenberg (DE)
(72) Erfinder: Schlenz, Rolf, W-5620 Velbert 15 (DE); Gustävel, Andreas, W-4030 Ratingen 6 (DE); Horstkötter, Ralf, Dipl.-Ing., W-5983 Balve 2 (DE); Strunk, Harald, W-5970 Plettenberg (DE)

(56) Entgegenhaltungen:
- EP-A- 0 005 961
- EP-A- 0 186 016
- EP-A- 0 411 343
- EP-A- 0 461 365
- CH-A- 667 842
- DE-A- 3 843 342
- DE-C- 833 118
- FR-A- 2 546 808
- GB-A- 1 067 830
- GB-A- 2 070 504
- GB-A- 2 096 940
- GB-A- 2 206 835
- US-A- 2 774 992
- US-A- 3 877 862
- PATENT ABSTRACTS OF JAPAN, vol. 10, no. 159 (M-486)[2215], 7th June 1986 & JP-A-61 12 313 (HASHIMOTO FORMING K.K.K.) 20-01-1986

## Beschreibung

Die Erfindung bezieht sich auf ein Verfahren und eine Vorrichtung zum Herstellen eines Kunststofformteils mit zumindest einer Dekormaterialbahn.

Es ist bekannt, daß z.B. Automobil-Ausstattungsteile zur optischen Aufwertung mit Textilien oder Folien überzogen werden. Das Überziehen erfolgt dabei im Kaschierverfahren oder auch durch Hinterspritzen der Textilien oder Folien auf Spritzgußmaschinen. In beiden Fällen ist der Verfahrensaufwand relativ groß und die dabei erreichte Oberflächenqualität der Teile dennoch nicht immer zufriedenstellend.

Die Erfindung geht aus von einem Verfahren und von einer Vorrichtung nach der EP-A- 0 186 016. Diese Druckschrift beschreibt ein Verfahren zum Herstellen eines Kunststofformteils mit zumindest einer Dekormaterialbahn in einem Formwerkzeug, das zwei Werkzeughälften und einen Formhohlraum zwischen den Werkzeughälften aufweist, wobei zunächst das Formwerkzeug durch Trennen der Werkzeughälften voneinander geöffnet wird, zwischen den Werkzeughälften wenigstens eine Dekormaterialbahn angeordnet wird, die Dekormaterialbahn mit einem Spannrahmen gehalten wird, der sich außerhalb des Formhohlraums befindet und aus einer oberen Spannrahmenhälfte und einer unteren Spannrahmenhälfte besteht und mit einer Haltekraft die es ermöglicht, daß die Dekormaterialbahn zwischen der oberen Spannrahmenhälfte und der unteren Spannrahmenhälfte zu schlüpfen vermag, plastifizierte Kunststoffmasse dem offenen Formhohlraum zugeführt wird und das Formwerkzeug durch Gegeneinanderbewegen der Werkzeughälften geschlossen wird, um das plastifizierte Kunststoffmaterial innerhalb des Formhohlraums formgebend zu verpressen. Die EP-A- 0 186 016 zeigt auch eine Vorrichtung mit einem Formwerkezug, das eine untere Werkzeughälfte und eine obere Werkzeughälfte, die relativ zueinander bewegbar sind, sowie einen zwischen den Werkzeughälften ausgebildeten Formhohlraum umfaßt, mit einer eine Plastifizierungseinrichtung aufweisenden Kunststoffverarbeitungsmaschine, mit Mitteln zum Zuführen der plastifizierten Kunststoffmasse in den offenen Formhohlraum und mit zumindest einem zweiteiligen Spannrahmen, bestehend aus einer unteren Spannrahmenhälfte und einer oberen Spannrahmenhälfte zum nachgiebigen Halten einer zwischen den Werkzeughälften anzuordnenden Dekormaterialbahn.

Der Erfindung liegt die Aufgabe zugrunde, ein Verfahren und eine Vorrichtung zum Herstellen eines Kunststofformteils, wobei insbesondere an ein Automobil-Ausstattungsteil, wie Türverkleidung, Säulenverkleidung, Hutablage, Handschuhfach, Lenksäulenverkleidung, Fahrzeughimmel, Sonnenblende, Kartentasche u. dgl. mehr gedacht ist, aufzuzeigen, mit dem relativ einfach und kostengünstig optisch aufgewertete Oberflächen mit sehr guter Oberflächenqualität erzielbar sind.

Zur Lösung dieser Aufgabe zeichnet sich das Verfahren erfindungsgemäß dadurch aus, daß zeitgleich mit dem Schließen der Werkzeughälften der Spannrahmen abgesenkt wird und dabei die untere Spannrahmenhälfte in einen den Formhohlraum umgebenden Freiraum der unteren Werkzeughälfte hineinbewegt wird, um zu verhindern, daß plastifizierte Kunststoffmasse, während sie formgebend verpreßt wird, über den Rand des Hohlraums der unteren Werkzeughälfte gelangt, bevor der Formhohlraum geschlossen ist.

Bei dem erfindungsgemäßen Verfahren wird einzig durch den Werkzeugschließvorgang die Kavität ausgefüllt und auch nur dadurch die Verbindung mit dem Dekormaterial erreicht. Durch die Wahl der geeigneten Verfahrensparameter, Massetemperatur, Werkzeugwandtemperatur, Werkzeugschließgeschwindigkeit, Werkzeugschließkraft, Viskosität der Schmelze (Homogenität) gelangt man, wie hier durchgeführte Versuche gezeigt haben, zu einer guten Verbindung bei guter bis sehr guter Oberflächenqualität. Das erfindungsgemäße Verfahren eignet sich auch besonders zur weitestgehend spannungsfreien und dadurch verzugsarmen Herstellung großflächiger Bauteile. Es können auch hochgefüllte und verstärkte (z.B. durch Langglasfasern) Kunststoffe eingesetzt werden, um erforderlichenfalls äußerst stabile Kunststofformteile zu erhalten. Durch die vorgesehene Schlupfmöglichkeit ergibt sich während des Formungsprozesses eine erleichterte Verformung (Recken/Stauchen) der Dekormaterialbahn. Besonders wichtig ist es, daß der Unterrahmen des spannrahmens in einen Freiraum der unteren Werkzeughälfte bewegt wird, bevor die Kunststoffmasse über den Rand des Formhohlraums treten kann.

In besonderen Anwendungsfällen sind neben der optischen Aufwertung einem Kunststofformteils (Außendekoration) auch funktionale Verbesserungen, wie Innenseitenauskleidung z.B. zur Geräuschdämpfung, wünschenswert. Um auch dieser Forderung zu genügen, ist gemäß einer besonders vorteilhaften Weiterbildung der Erfindung vorgesehen, daß zwischen den Werkzeughälften des offenen Formwerkzeuges zwei Dekormaterialbahnen angeordnet werden und zwischen die Dekormaterialbahnen eine Charge der plastifizierten Kunststoffmasse eingebracht und sodann durch Schließen des Formwerkzeuges gegen die Dekormaterialbahnen formgebend verpreßt wird. Auf diese Weise werden also beide Produktseiten des Kunststofformteils verfahrensbedingt sowohl von der Produktinnenseite als auch von der Produktaussenseite mit Dekormaterial während des Produktformungsprozesses gleichzeitig bezogen. Dabei kann auch vorgesehen werden, daß die eine Dekorationsmaterialbahn beim Formungsprozeß partiell für Befestigungselemente oder zur Bildung von Domen, Verrippungen od. dgl. von der plastifizierten Kunststoffmasse durchdrungen wird.

Gemäß einer Ausführungsform der Erfindung kann vorgesehen sein, daß die plastifizierte Kunststoffmasse von der Plastifizierungseinrichtung einer Kunststoffverarbeitungsmaschine der offenen Formkavität unmittelbar zugeführt wird. Beispielsweise kann die Zuführung durch Einspritzen oder Einextrudieren der plastifizierten Kunststoffmasse, gegebenenfalls unter Verwendung von Düsenverlängerungen, in die offene Formkavität erfolgen.

Gemäß der Erfindung ist es mit Vorteil auch möglich, daß ein beheizter Zylinder mit Kolben, der durch die Plastifizierungseinrichtung gespeist und durch ein freiprogrammiertes Handhabungssystem befördert, die Schmelze in der geöffneten Werkzeugstellung in genau definierter Bahn ablegt.

Gemäß einer anderen bevorzugten Ausführungsform der Erfindung kann vorgesehen sein, daß die plastifizierte Kunststoffmasse von der Plastifizierungseinrichtung einer Kunststoffverarbeitungsmaschine mit einem teilespezifischen Massevolumen einer Vorformkammer zugeführt, die Vorformkammer in die offene Formkavität eingefahren und hier die plastifizierte, für die Verteilung verformungsspezifisch vorgeformte Kunststoffmasse abgelegt wird. Hierfür wird mit Vorteil eine Vorformkammer verwendet, deren Umriß bzw. Öffnungsquerschnitt dem herzustellenden Formteil im verkleinerten Maßstab, zumindest angenähert entspricht. Auch sind Maßnahmen getroffen, um die plastifizierte Kunststoffmasse, die in die Vorformkammer eingespritzt oder einextrudiert wird, in der Vorformkammer auf eine zur Verformung geeignete Massetemperatur zu halten. Demgemäß wird eine beheizte, die plastifizierte Kunststoffmasse auf Massetemperatur haltende Vorformkammer verwendet. Auch sind für das Einfahren der Vorformkammer in die Formkavität Vorrichtungen, die beispielsweise teleskopierbar arbeiten, vorzusehen. Ferner sind für das Ablegen des Vorformlings in die Formkavität Mittel an der Vorformkammer vorzusehen, wie Abstreifer, Auswerfer, Wendevorrichtungen od. dgl.. Bevorzugt wird eine Vorformkammer mit zu öffnender, wie aufklappbarer Bodenwand verwendet.

Ein sich einstellendes Δ T zwischen der Vorformkammerwandung und Vorformlingsanlagefläche führt zu einer sehr dünnen Verfestigungsschicht, die einerseits eine Schwerkraftentformung ermöglicht andererseits beim Masseverteilungs- bzw. Formungsprozeß im heißen Massevolumen wieder aufschmilzt. Um die Schwerkraftentformung zu begünstigen, kann in Ausgestaltung der Erfindung eine Vorformkammer mit geringem Haftvermögen gegenüber der plastifizierten Kunststoffmasse verwendet werden. Insbesondere kann eine Vorformkammer verwendet werden, die eine innere, aus einer Metalloxydschicht bestehende Oberfläche aufweist. Alternativ kann eine Vorformkammer verwendet werden, die eine innenseitige Oberflächenbeschichtung oder Auflage aus Buntmetall aufweist.

Mit besonderem Vorteil wird eine aus porösem bzw. luftdurchlässigem Material, insbesondere Sintermetall bestehende Vorformkammer verwendet. Zum Ablegen der plastifizierten Kunststoffmasse wird dann die Vorformkammer, zweckmäßigerweise durch Aufklappen der Bodenwand geöffnet und gleichzeitig mit einer Gaszufuhr beaufschlagt. Das angelegte Gas durchsetzt die Sintermetallwandungen der Vorformkammer und ermöglicht durch ein gleichmäßig aufgebautes Gaspolster die Wandungs-Masse-Adhäsion aufzuheben und eine Niederdruckentformung auszulösen. Es erfolgt also durch die Gasanlegung oder Gasbeaufschlagung ein schlagartiges zeitlich begrenztes Ablösen der plastifizierten Kunststoffmasse von der Vorformkammer und die plastifizierte Kunststoffmasse fällt in die offene Formkavität.

Es kann weiterhin vorgesehen sein, daß ein beheizter Zylinder mit Kolben, der durch die Plastifizierungseinrichtung gespeist und durch ein freiprogrammiertes Handhabungssystem befördert, die Schmelze in der geöffneten Werkzeugstellung in genau definierter Bahn ablegt.

Das Dekormaterial, das beim erfindungsgemäßen Verfahren zur Anwendung gelangen kann, ist im weitesten Sinne zu verstehen. Insbesondere sollen als Dekormaterialbahnen ein- oder mehrlagige, gegebenenfalls mit Schaumrücken od. dgl. kaschierte Kunststoffolien, Gewebe, Gewirke, Gestricke, Filze, Leder u. dgl. verwendet werden. Dabei ist natürlich darauf zu achten, daß beim Formungsprozeß ein inniger Verbund zwischen dem Dekormaterial einerseits und der plastifizierten Kunststoffmasse andererseits sichergestellt ist, was durch geeignete Materialauswahl und/oder Beschichtung des Dekormaterials leicht realisiert werden kann.

### Beispiel einer Verfahrensbeschreibung

Bei diesem Beispiel sollen beide Produktseiten eines zu fertigenden Kunststofformteils gleichzeitig sowohl von der Produktinnenseite als auch von der Produktaußenseite z.B. textil- oder folienbezogen formgebend verpreßt werden.

Mit Hilfe eines Plastifiziergerätes, z.B. Spritzguß-Plastifiziereinheit oder Extruder werden thermoplastische Formmassen bei relativ niedrigen Temperaturen aufbereitet, d. h. plastifiziert.

In einer mittelbar oder unmittelbar an die Plastifiziereinheit angegliederte Vertikalschließe wird ein Formungswerkzeug aufgespannt mit zusätzlichen Funktionsträgern:
a) Schlupfspannrahmen zur Textil- und/oder Folien-Zuschnittaufnahme, z.B. für Außendekoration,
b) Schlupfspannrahmen zur Textil- und/oder Folien-Zuschnittaufnahme, z.B. für Innenauskleidung,
c) Teleskoparm oder achsial verfahrbare Plastifiziereinheit mit integrierter Formmasse-Vorformkammer,
in das die plastifizierte Formmasse verfahrensbedingt gefüllt und mit zwei Textil- und/oder Folien-Zuschnitten zum Produkt geformt wird.

### Verfahrensablauf

- Beide Werkzeughälften auf dem Ober- und Unterformträger horizontal aufgespannt, stehen in Offenstellung.
- Zwischen den Werkzeughälften, aber über die jeweiligen Grundplatten überstehend, sind ein Doppel-Oberspannrahmen und ein Doppel-Unterspannrahmen so installiert, daß beide Rahmen untereinander bewegt, also geöffnet und auf Schlupfspannung geschlossen werden können, die beiden Rahmen aber auch mit Werkzeugschließvorgang in gleicher Richtung mitlaufen, so daß der "Unterstoff" auf den "Oberstoff" zubewegt wird und beim Formungsprozeß auf Produktwandstärkenabstand gegenüberstehen.
- Vor dem Formungsprozeß wird durch ein installiertes Handlingsgerät je ein Stoffzuschnitt in den Unterrahmen und Oberrahmen eingelegt, die beiden Rahmen halten die Zuschnitte nur so fest gespannt, (z.B. mit pneumatischer Steuerung) daß beide Stoffe während des Formungsprozesses leicht schlupfen können, um damit die Dekorations-Verformung zu erleichtern (recken/stauchen).
- Nachdem beide Stoffzuschnitte in die Spannrahmen plaziert sind, fährt ein z.B. Teleskoparm oder eine Düsenverlängerung des z.B. Extruders zwischen die Spannrahmen und plaziert entweder eine Vorformkammer oder eine Vorformlingsdüse verformungsspezifisch direkt über dem "Unterstoff", also unmittelbar mittig oder mittels eines Heizkanalsystems gesteuert, über dem Werkzeugkern, der entsprechend diesen Verformungsbesonderheiten auf geeignete Temperaturen geheizt ist.
- Die Vorlage des Massevolumens erfolgt entweder: Indem die Düse des Plastifiziergerätes vor der Vorformkammer verfahrensbedingt so justiert wird, daß das Massevolumen teilespezifisch in die Vorformkammer eingespritzt oder einextrudiert wird, oder: Ein quer zur Plastifiziereinheit angeordneter der Verformungsgeometrie angepaßter Mehrfach-Heißkanal-Verteilerbalken aufgeflanscht ist, der mit der Plastifiziereinheit über das Unterwerkzeug verfahren wird. Nach vollendetem Füllvorgang und verfahrensbedingtem Abzug der Formmassen-Auftragsvorrichtungen liegt auf dem Unterstoff ein plastifizierter "Vorformling" verformungsspezifisch vorgeformt für die Verteilung. Im besonderen kann ein Masse-Vorformling als Extrudat oder Spritzling auch außerhalb der Verformungseinheit hergestellt werden und mittels eines Handlingsgerätes auf den Unterstoff aufgelegt werden.
- Unmittelbar nachdem der Vorformling plaziert ist, fahren die Werkzeughälften zwangsgesteuert mit den Dekorspannrahmen gegeneinander und formen das Produkt mit beidseitiger Dekoration, wobei weder unliebsame Formmassedrucke noch Dekor-Verformungsüberspannungen auftreten.
- Durch geeignete Werkzeugsauslegung und Plazierung von Dekor-Formzuschnitten in geeigneter Weise ins Werkzeug werden maschinenfallende Fertigteile entformt oder in nachgeschalteter Konfektion ein Rand-Dekorbeschnitt vorgenommen.

Die zum Durchführen des Verfahrens erfindungsgemäß vorgesehene Vorrichtung ist in den Ansprüchen 15 bis 21 gekennzeichnet. Im Anspruch 15 wird hinsichtlich des Merkmals, daß in der unteren Werkzeughälfte ein den Hohlraum umgebender Freiraum zur Aufnahme der unteren Spannrahmenhälfte ausgebildet ist, von einer Vorrichtung, wie sie die GB-A- 1 067 830 zeigt, Gebrauch gemacht. Diese Vorrichtung besteht jedoch aus einem Spritzgußwerkzeug, bei dem zunächst das Werkzeug geschlossen und dann in den bis auf Angußkanäle geschlossenen Formhohlraum eine plastifizierte Kunststoffmasse unter hohem Druck eingespritzt wird. Die erfindungsgemäße Vorrichtung ist also insoweit nicht mit dem Gegenstand der GB-A- 1 067 830 vergleichbar.

Die erfindungsgemäße Vorrichtung weist eine Reihe beachtlicher Vorteile auf. Beim Gegenstand des Anspruchs 15 ist insbesondere die Ausbildung der unteren Spannrahmenhälfte hervorzuheben, wodurch eine Mehrfachfunktion erzielt wird. Der Spannrahmen vermag durch die erfindungsgemäße Ausbildung neben seiner ureigenen Haltefunktion für die jeweilige Dekorationsmaterialbahn auch eine Abdichtungsfunktion zum Abdichten des Umfangsrandes des Hohlraums der unteren Werkzeughälfte und darüber hinaus auch eine Auswerferfunktion für das fertige Kunststoffformteil zu erfüllen Durch die funktionale Einheit ergibt sich ein vergleichweise geringer Werkzeugaufwand, ein weitgehender Schutz der Dekorationsmaterialbahn gegen Beschädigung und eine weitgehende Unabhängigkeit von der Blockmaßdicke der jeweiligen Dekorationsmaterialbahn. Zudem wird eine Umbugbildung der Dekorationsmaterialbahn an den Formteilkanten ermöglicht, zumindest aber begünstigt.

Durch die Maßnahme nach Anspruch 16 wird erreicht, daß dem Formhohlraum die plastifizierte Kunststoffmasse mit teilespezifischem Massevolumen, auf Massetemperatur gehalten und verformungsspezifisch vorgeformt durch Schwerkraftentformung zugeführt werden kann.

Die Maßnahmen der Ansprüche 19 bis 20 dienen dazu, die Schwerkraftentformung zu erleichtern und zu begünstigen.

Ein unmittelbares, strangförmiges Ablegen der plastifizierten Kunststoffmasse in die offene Formkavität wird durch die Maßnahme nach Anspruch 21 ermöglicht.

Für die Herstellung komplizierter Kunststofformteile können die im Anspruch 22 angegebenen Maßnahmen besonders vorteilhaft sein, obgleich diese Maßnahmen auch für die Formgebung geometrisch einfach gestalteter Formteile angewandt werden können.

Die Maßnahme nach Anspruch 23 ermöglicht einen Konturschnitt, wobei die Anordnung des Trennmessers so getroffen werden kann, daß der Konturschnitt ohne eine Verlängerung der Zykluszeiten erfolgt.

Im Folgenden wird die Erfindung anhand der beigefügten Zeichnungen näher erläutert. Es zeigen:
- Fig. 1: die schaubildliche Gesamtansicht einer Vorrichtung zum Herstellen von Kunststofformteilen,
- Fig. 2: einen vertikalen Teilschnitt durch das geöffnete Formwerkzeug der Vorrichtung nach Fig. 1,
- Fig. 3: einen vertikalen Teilschnitt durch das geschlossene Formwerkzeug nach Fig. 1,
- Fig. 4: eine erste Einrichtung zum Einbringen der plastifizierten Kunststoffmasse in die offene Formkavität des Formwerkzeuges,
- Fig. 5: eine zweite Einrichtung zum Einbringen der plastifizierten Kunststoffmasse in die offene Formkavität des Formwerkzeuges,
- Fig. 6: eine dritte Einrichtung zum Einbringen der plastifizierten Kunststoffmasse in die offene Formkavität und
- Fig. 7 bis 9: jeweils einen Schnitt durch ein formgebend verpreßtes Kunststofformteil.

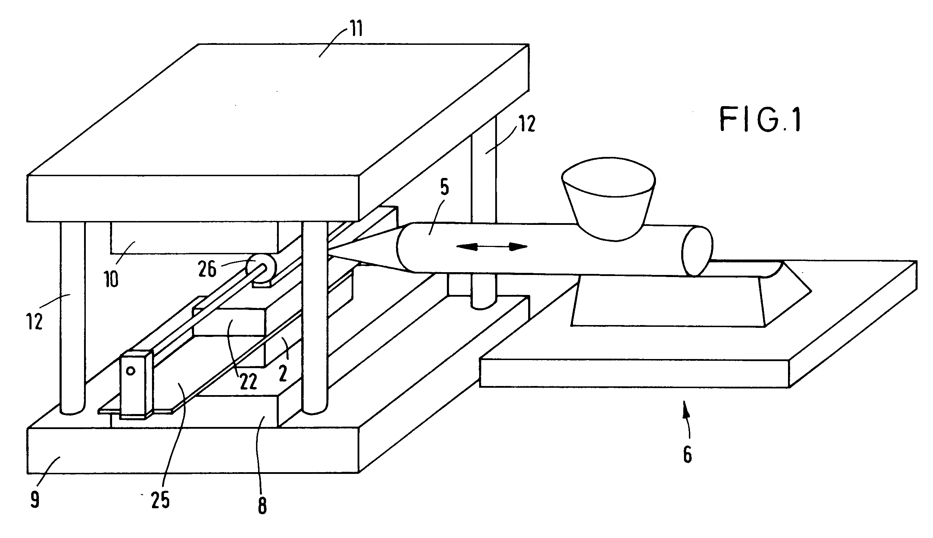

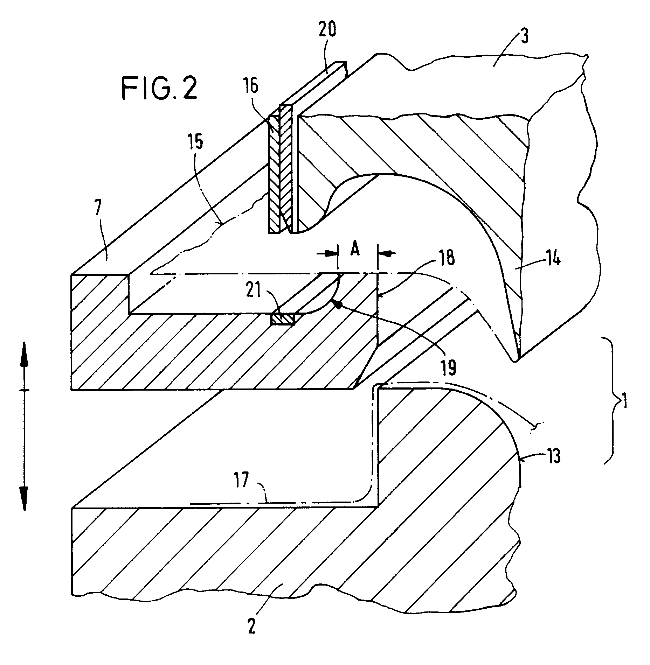

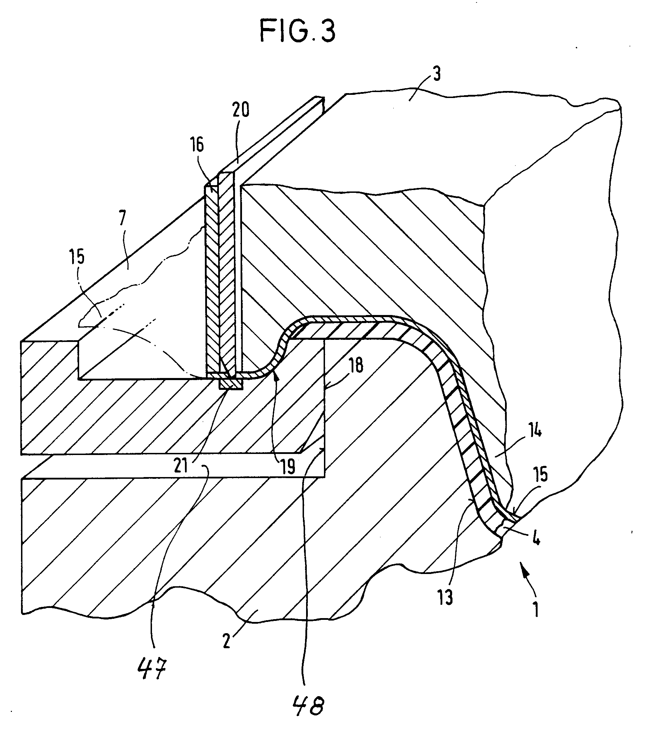

Die Vorrichtung nach den Fig. 1 bis 3 weist ein Formwerkzeug 1 mit einer unteren Werkzeughälfte 2 und einer oberen Werkzeughälfte 3 sowie einen zwischen den Werkzeughälften ausgebildeten Formhohlraum 4 (Kavität) auf. Die Vorrichtung umfaßt weiter eine, eine Plastifizierungseinrichtung 5 aufweisende Kunststoffverarbeitungsmaschine 6, noch zu beschreibende Mittel zum Zuführen der plastifizierten Kunststoffmasse in den offenen Formhohlraum 4 und zumindest einen zweiteiligen Spannrahmen mit einer in den Fig. 2 und 3 gezeigten unteren Spannrahmenhälfte 7.

Die untere Werkzeughälfte 2 sitzt auf einer unteren Aufspannplatte 8, die wiederum von einer Werkzeugaufnahmeplatte 9 getragen wird. Die obere Werkzeughälfte 3, die aufgrund der gewählten Perspektive in Fig. 1 nicht zu sehen ist, sitzt an einer oberen Aufspannplatte 10, die wiederum an einer oberen Werkzeugaufnahmeplatte 11 befestigt ist. Über an sich bekannte Säulenführungen 12 sind die Werkzeughälften 2 und 3 relativ zueinander verfahrbar, und zwar aus einer offenen Position nach Fig. 1 und 2 in eine geschlossene Position nach Fig. 3 und umgekehrt. Die untere Werkzeughälfte 2 weist einen Hohlraum 13 und die obere Werkzeughälfte einen darin einfahrbaren Kern 14 auf. Die Kavität 4 ist zwischen dem Hohlraum 13 und dem Kern 14 ausgebildet.

Der erwähnte Spannrahmen umfaßt die ebenfalls erwähnte untere Spannrahmenhälfte 7 und eine obere Spannrahmenhälfte. Im einfachsten Fall wird die obere Spannrahmenhälfte aus der oberen Werkzeughälfte 3 gebildet, so daß beim Zufahren des Werkzeugs 1 die Dekorationsmaterialbahn 15 außerhalb der Kavität 4 zwischen der oberen Werkzeughälfte 3 (als obere Spannrahmenhälfte) und der unteren Spannrahmenhälfte 7 eingeklemmt wird.

Im Ausführungsbeispiel nach Fig. 2 und 3 ist eine separat ausgebildete obere Spannrahmenhälfte 16 dargestellt, die über nicht gezeigte Steuerungsmittel gegen die untere Spannrahmenhälfte 7 verspannbar ist, derart, daß der zwischen den Spannrahmen 7, 16 eingelegte Dekormaterialbahn-Zuschnitt beim Formungsprozeß zu schlupfen vermag.

Sofern beide Produktseiten des zu fertigenden Kunststofformteils eine Dekormaterialbahn aufweisen sollen, kann mit einem zweiten Spannrahmen in nicht näher dargestellter Weise gearbeitet werden. Es ist aber auch möglich, einen Dekorzuschnitt auf die untere Werkzeughälfte 2 aufzulegen und eine randseitige Umlaufverspannung durch das Zusammenfahren der Werkzeughälften 2 und 3 zu bewirken. Diese Möglichkeit ist in Fig. 2 angedeutet, indem hier eine untere Dekormaterialbahn 17 mit einer strichpunktierten Linie gezeigt ist.

Die in Fig. 2 und 3 gezeigte untere Spannrahmenhälfte 7 ist mit einer inneren, senkrecht ausgerichteten Wandung 18 und mit einem davon durch einen Abstand A beabstandeten bogenförmig nach unten abfallenden Wandungsbereich 19 ausgebildet. Die Beabstandung zwischen der Wandung 18 und dem Wandungsbereich 19 ist in Fig. 2 mit A gekennzeichnet. Bei der Herstellung eines Kunststofformteils wird eine plastifizierte Kunststoffmasse mit einem vorgegebenen Massevolumen in den Hohlraum 13 der unteren Werkzeughälfte 2 oder auf eine vorher eingelegte untere Dekormaterialbahn 17 abgelegt. Alsdann wird die obere Werkzeughälfte 3 und damit auch der Spannrahmen mit vorher eingespannter Dekormaterialbahn 15 nach unten bewegt, also das Werkzeug geschlossen. Dabei wird die eingelegte Kunststoffmasse formgebend verpreßt, ein Vorgang, der auch als Verdrängungsformen bezeichnet werden kann. Wesentlich ist, daß die Wandung 18 der unteren Spannrahmenhälfte 7 bereits in die untere Werkzeughälfte 2, die hierfür einen den Formhohlraum 4 umgebenden Freiraum 47 mit einer senkrecht ausgerichteten Wandung 48 aufweist, eingetaucht ist, bevor die plastifizierte Kunststoffmasse den Wandungsbereich an dem die obere Werkzeughälfte 3 anliegt 19 erreicht haben kann. Es ist weiter wesentlich, der Abstand A zwischen der Wandung 18 und dem Wandungsbereich 19; denn eine Zusammenlegung dieser Wandungsbereiche würde bedeuten, daß die Dekormaterialbahn 15 beim Schließen des Formwerkzeuges 1 leicht beschädigt werden könnte. Auch wäre man in der Dicke der zur Verwendung kommenden Dekorationsmaterialbahnen nicht variabel. Dem Abstand A kommt aber eine weitere wesentliche Bedeutung insofern zu, als die untere Spannrahmenhälfte 7 dadurch auch als Auswerfer für das verfestigte Kunststofformteil fungieren kann, was Fig. 3 besonders anschaulich verdeutlicht.

In den Fig. 2 und 3 ist weiterhin gezeigt, daß die Vorrichtung mit einem Trennmesser 20 ausgerüstet ist, um einen Konturschnitt des Kunststofformteils zu ermöglichen. Das Trennmesser 20 ist in der oberen Werkzeughälfte 3 gelagert und kann z.B. durch die Öffnungsbewegung des Werkzeugs zwangsgesteuert werden. Es ist ebenfalls möglich, für das Trennmesser 20 nicht näher dargestellte mechanische und/oder hydraulische Steuerungsmittel vorzusehen. Die Schneide des Trennmessers 20 arbeitet gegen einen in die untere Spannrahmenhälfte 7 eingelassenen Einsatz 21.

Zum Einbringen der plastifizierten Kunststoffmasse in die offene Formkavität 4 können verschiedene Mittel vorgesehen werden Ein erstes bevorzugtes Mittel ist als Vorformkammer 22 ausgebildet, die die plastifizierte Kunststoffmasse mit teilespezifischem Massevolumen und verformungsspezifisch vorgeformt aufnimmt. Die Vorformkammer 22 umschließt einen Hohlraum 23 für die Aufnahme der plastifizierten Kunststoffmasse,die über einen Zufuhrkanal 24 von der Plastifizierungseinrichtung 5 her, darin eingebracht wird. Vorformkammer 22 und Plastifizierungseinrichtung 5 bilden eine Baueinheit, die entsprechend dem Doppelpfeil (Fig. 1) in den Werkzeugbereich einfahrbar und aus diesem herausfahrbar ist.

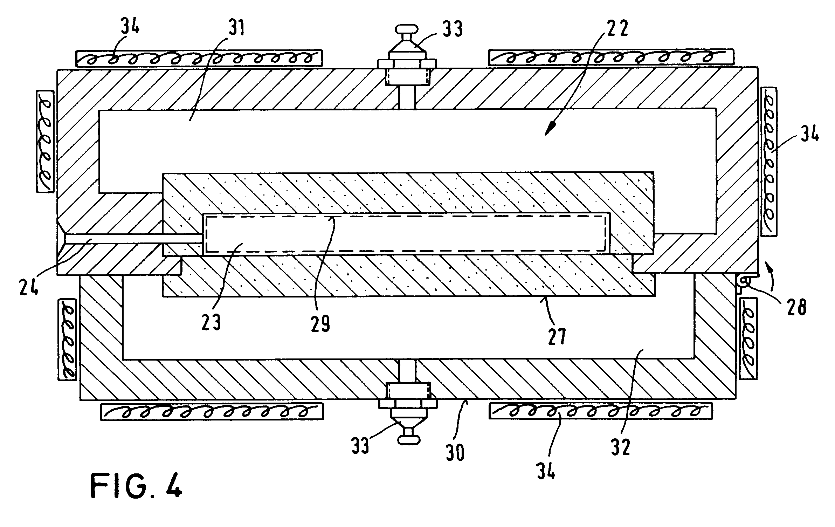

Die Vorformkammer 22 ist mit einem zu öffnenden Boden zur Ablage der plastifizierten Kunststoffmasse versehen. In Fig. 1 ist gezeigt, daß der Boden aus einem Schieber 25 bestehen kann, der zum Öffnen und Schließen mit einer Kolben-Zylinder-Einheit 26 zusammenwirkt. In Fig. 4 ist gezeigt, daß der Boden auch aus einem Klappdeckel 27 bestehen kann, wobei das Auf- und Zuklappen über ein Scharnier 28 erfolgt.

Die Innenwandungen des Hohlraumes 23 der Vorformkammer 22 sind haftarm gegenüber der plastifizierten Kunststoffmasse. Hierzu können sie eine gestrichelt dargestellte Oberfläche 29 aufweisen, die aus einer polierten Metalloxydschicht oder aus Buntmetall besteht.

In Fig. 4 ist eine Verformkammer 22 gezeigt, deren Wandungen aus Sintermetall (oder einem anderen porösen bzw. gasdurchlässigem Material) gebildet sind. Die Vorformkammer ist von einem Gehäuse 30, das geöffnet werden kann, aufgenommen, derart, daß ober- und unterseitig der Vorformkammer 22 jeweils ein Hohlraum 31 und 32 entsteht. In die Hohlräume 31 und 32 kann über Anschlußeinrichtungen 33 ein Gas eingeleitet werden, daß die porösen Wandungen der Vorformkammer 22 durchsetzt und ein Gaspolster aufbaut, um die Wandungs-Masse-Adhäsion zwischen der plastifizierten Kunststoffmasse und der Vorformkammer 22 aufzuheben. In der Praxis wird man zunächst den Klappdeckel 27 und mit dem Öffnen desselben, die anderen Wandungsbereiche der Vorformkammer mit Gas beaufschlagen, um eine optimale Masseablage zu erreichen.

Es ist wichtig, die plastifizierte Kunststoffmasse auf eine für die Formung richtige Massetemperatur zu halten. Aus diesem Grund ist die Vorformkammer 22 beheizbar. In Fig. 4 sind Heizelemente 34 in mehr schematischer Darsteilungsmanier gezeigt.

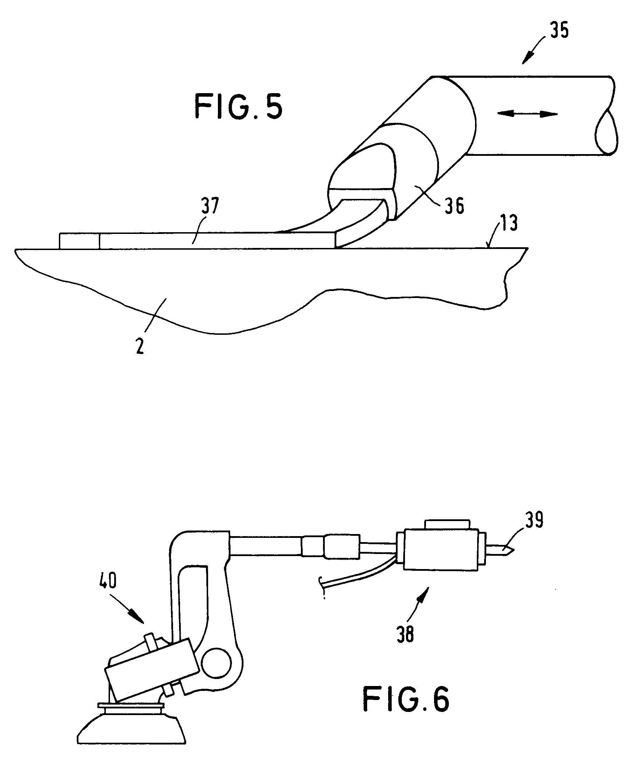

Ein weiteres Mittel zum Einbringen der plastifizierten Kunststoffmasse in die offene Formkavität zeigt Fig. 5, und zwar in Form einer Düseneinrichtung 35. Die Düseneinrichtung 35 ist anstelle der Vorformkammer 22 an die Plastifizierungseinrichtung 5 anschließbar und zusammen mit dieser in den Werkzeugbereich einfahrbar und herausbewegbar. Zur Düseneinrichtung 35 gehört ein Düsenmundstück 36 zum unmittelbaren Zuführen der plastifizierten Kunststoffmasse in die offene Formkavität 4 in Form eines Massestrangs 37.

Ein noch weiteres Mittel zum Einbringen der plastifizierten Kunststoffmasse in die offene Formkavität ist in Fig. 6 gezeigt. Hier ist eine beheizte, durch die Plastifizierungseinrichtung 5 speisbare Kolben-Zylinder-Einrichtung 38 vorgesehen, die ein verformungsspezifisches Massevolumen aufnimmt und über ein Düsenmundstück 39 in die offene Formkavität 4 ablegt. Die Kolben-Zylinder-Einrichtung 38 ist mit einem freiprogrammierbaren Handhabungssystem 40, das um mehrere Achsen beweglich ist, verbunden. Diese Einrichtung eignet sich zum unmittelbaren Einbringen der plastifizierten Kunststoffmasse in die offene Formkavität in genau definierbarer Bahnablage. Geeignet ist diese Einrichtung insbesondere für die Herstellung komplizierterer Formgebilde, wie sie bei Fahrzeuginnen-Verkleidungsteilen häufig anzutreffen sind.

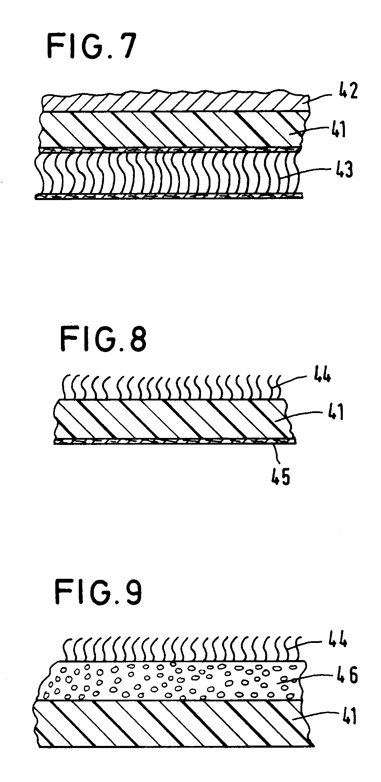

In den Fig. 7 bis 9 sind verschiedene Querschnitte von Kunststofformteilen dargestellt. Fig. 7 zeigt dabei einen nach dem beschriebenen Verfahren geformten Kunststoffträger 41, der auf der Sichtseite eine genarbte Tiefziehfolie 42 und auf der Rückseite eine z.B. als Schallschutz dienende Materialbahn 43 trägt. Beim Kunststoffteil nach Fig. 7 kann es sich z.B. um eine Türverkleidung handeln.

Fig. 8 zeigt ein Kunststoffteil mit einem Kunststoffträger 41, der einseitig einen Dekorationsstoff 44 und anderseitig eine Glasmatte 45 trägt. Das Kunststofformteil nach Fig. 9 schließlich besteht aus einem Kunststoffträger 41, der nur einseitig eine Materialbahn trägt, die aus einem Dekorationsstoff 44 mit einem Schaumrücken 46, der aus PP, PU oder PE gebildet sein kann, besteht.

## Patentansprüche

1. Verfahren zum Herstellen eines Kunststofformteils mit zumindest einer Dekormaterialbahn (15) in einem Formwerkzeug (1), das zwei Werkzeughälften (2, 3) und einen Formhohlraum (4) zwischen den Werkzeughälften (2, 3) aufweist, wobei zunächst das Formwerkzeug (1) durch Trennen der Werkzeughälften (2, 3) voneinander geöffnet wird, zwischen den Werkzeughälften (2, 3) wenigstens eine Dekormaterialbahn (15) angeordnet wird, die Dekormaterialbahn (15) mit einem Spannrahmen gehalten wird, der sich außerhalb des Formhohlraums (4) befindet und aus einer oberen Spannrahmenhälfte (16) und einer unteren Spannrahmenhälfte (7) besteht und mit einer Haltekraft die es ermöglicht, daß die Dekormaterialbahn (15) zwischen der oberen Spannrahmenhälfte (16) und der unteren Spannrahmenhälfte (7) zu schlüpfen vermag, plastifizierte Kunststoffmasse dem offenen Formhohlraum (4) zugeführt wird und das Formwerkzeug (1) durch Gegeneinanderbewegen der Werkzeughälften (2, 3) geschlossen wird, um das plastifizierte Kunststoffmaterial innerhalb des Formhohlraums (4) formgebend zu verpressen, dadurch gekennzeichnet, daß zeitgleich mit dem Schließen der Werkzeughälften (2, 3) der Spannrahmen abgesenkt wird und dabei die untere Spannrahmenhälfte (7) in einen den Formhohlraum (4) umgebenden Freiraum (47) der unteren Werkzeughälfte (2) hineinbewegt wird, um zu verhindern, daß plastifizierte Kunststoffmasse, während sie formgebend verpreßt wird, den Wandungsbereich (19) erreicht, bevor der Formhohlraum (4) geschlossen ist.

2. Verfahren nach Anspruch 1, dadurch gekennzeichnet, daß der Spannrahmen beim Schließen der Werkzeughälften (2, 3) soweit in den Freiraum (47) der unteren Werkzeughälfte (2) hineinbewegt wird, bis die Oberseite der unteren Spannrahmenhälfte (7) mit der Wandung des Hohlraums (13) auf gleicher Höhe liegt, um den Formhohlraum (4) über einen Teilbereich der unteren Spannrahmenhälfte (7) hinweg zu vergrößern.

3. Verfahren nach Anspruch 1 oder 2, dadurch gekennzeichnet, daß zwischen den Werkzeughälften (2, 3) des offenen Formwerkzeugs (1) zwei Dekormaterialbahnen (15, 17) angeordnet werden und zwischen die Dekormaterialbahnen eine Charge der plastifizierten Kunststoffmasse eingebracht und sodann durch Schließen des Formwerkzeuges (1) gegen die Dekormaterialbahnen formgebend verpreßt wird.

4. Verfahren nach wenigstens einem der Ansprüche 1 bis 3, dadurch gekennzeichnet, daß die plastifizierte Kunststoffmasse von einer Plastifizierungseinrichtung (5) einer Kunststoffverarbeitungsmaschine (6) dem offenen Formhohlraum (4) unmittelbar zugeführt wird.

5. Verfahren nach wenigstens einem der Ansprüche 1 bis 3, dadurch gekennzeichnet, daß die plastifizierte Kunststoffmasse von einer Plastifizierungseinrichtung (5) einer Kunststoffverarbeitungsmaschine (6) mit einem teilespezifischen Massevolumen einer Vorformkammer (22) zugeführt, die Vorformkammer (22) in den offenen Formhohlraum (4) eingefahren und hier die plastifizierte, für die Verteilung verformungsspezifisch vorgeformte Kunststoffmasse abgelegt wird.

6. Verfahren nach Anspruch 5, dadurch gekennzeichnet, daß eine beheizte, die plastifizierte Kunststoffmasse auf Massetemperatur haltende Vorformkammer (22) verwendet wird.

7. Verfahren nach Anspruch 5 oder 6, dadurch gekennzeichnet, daß eine Vorformkammer (22) mit zu öffnender, wie aufklappbarer Bodenwand (25, 27) verwendet wird.

8. Verfahren nach wenigstens einem der Ansprüche 5 bis 7, dadurch gekennzeichnet, daß eine Vorformkammer (22) mit geringem Haftvermögen gegenüber der plastifizierten Kunststoffmasse verwendet wird.

9. Verfahren nach wenigstens einem der Ansprüche 5 bis 8, dadurch gekennzeichnet, daß eine Vorformkammer (22) verwendet wird, die eine innere, aus einer Metalloxydschicht bestehende Oberfläche (29) aufweist.

10. Verfahren nach wenigstens einem der Ansprüche 5 bis 8, dadurch gekennzeichnet, daß eine Vorformkammer (22) verwendet wird, die eine innenseitige Oberflächenbeschichtung oder Auflage aus Buntmetall aufweist.

11. Verfahren nach wenigstens einem der Ansprüche 5 bis 8, dadurch gekennzeichnet, daß eine aus porösem bzw. luftdurchlässigem Material, insbesondere Sintermetall bestehende Vorformkammer (22) verwendet wird.

12. Verfahren nach Anspruch 11, dadurch gekennzeichnet, daß die Vorformkammer (22) zum Ablegen der plastifizierten Kunststoffmasse geöffnet und mit einer Gaszufuhr beaufschlagt wird.

13. Verfahren nach wenigstens einem der Ansprüche 1 bis 4, dadurch gekennzeichnet, daß ein beheizter Zylinder mit Kolben (38), der durch die Plastifizierungseinrichtung (5) gespeist und durch ein freiprogrammiertes Handhabungssystem (40) befördert, die plastifizierte Kunststoffmasse in der geöffneten Werkzeugstellung in genau definierter Bahn ablegt.

14. Verfahren nach wenigstens einem der Ansprüche 1 bis 13, dadurch gekennzeichnet, daß als Dekormaterialbahnen ein- oder mehrlagige, gegebenenfalls mit Schaumrücken (46) od. dgl. kaschierte Kunststoffolien (42), Gewebe, Gewirke, Gestricke, Filze, Leder od. dgl. verwendet werden.

15. Vorrichtung zum Durchführen des Verfahrens nach den Ansprüchen 1 bis 14 mit einem Formwerkzeug (1), das eine untere Werkzeughälfte (2) und eine obere Werkzeughälfte (3), die relativ zueinander bewegbar sind, sowie einen zwischen den Werkzeughälften (2, 3) ausgebildeten Formhohlraum (4) umfaßt, mit einer eine Plastifizierungseinrichtung (5) aufweisenden Kunststoffverarbeitungsmaschine (6), mit Mitteln zum Zuführen der plastifizierten Kunststoffmasse in den offenen Formhohlraum (4) und mit zumindest einem zweiteiligen Spannrahmen, bestehend aus einer unteren Spannrahmenhälfte (7) und einer oberen Spannrahmenhälfte (16) zum nachgiebigen Halten einer zwischen den Werkzeughälften (2, 3) anzuordnenden Dekormaterialbahn (15), dadurch gekennzeichnet, daß in der unteren Werkzeughälfte (2) ein den Hohlraum (13) ungebender Freiraum (47) zur Aufnahme der unteren Spannrahmenhälfte (7) beim Schließen des Formwerkzeugs (1) ausgebildet ist, der eine senkrecht ausgerichtete Wandung (48), die parallel zur inneren Begrenzungswand (18) der unteren Spannrahmenhälfte (7) verläuft und eine Tiefe aufweist, die zumindest der Höhe der unteren Spannrahmenhälfte (7) entspricht, daß sich an der inneren Begrenzungswand (18) der unteren Spannrahmenhälfte (7) oberendig ein horizontaler Wandungsbereich geringer Breite anschließt, der wenn die untere Spannrahmenhälfte (7) in den Freiraum (47) eingetaucht ist zusammen mit der oberen Werkzeughälfte (3) den Formhohlraum (4) randseitig ergänzt und als Auswerfer für das Kunststofformteil dient und daß sich an den horizontalen Wandungsbereich ein bogenförmig nach unten abfallender Wandungsbereich (19) anschließt, gegen den sich ein entsprechend geformter Bereich der oberen Werkzeughälfte (3) unter Einschluß der Dekormaterialbahn (15) abzustützen vermag.

16. Vorrichtung nach Anspruch 15, dadurch gekennzeichnet, daß eine beheizbare Vorformkammer (22) mit einer Zufuhröffnung (24) für die plastifizierte Kunststoffmasse als Mittel zum Zuführen der plastifizierten Kunststoffmasse in den offenen Formhohlraum (4) vorgesehen ist, die eine zu öffnende Bodenwand (25, 27) aufweist.

17. Vorrichtung nach Anspruch 16, dadurch gekennzeichnet, daß die innenseitige Oberfläche (29) der Vorformkammer (22) aus einer polierten Metalloxydschicht oder aus Buntmetall besteht.

18. Vorrichtung nach Anspruch 16 oder 17, dadurch gekennzeichnet, daß die Vorformkammer (22) aus einem porösen bzw. gasdurchlässigen Material, insbesondere Sintermetall besteht und in einem Gehäuse (30) aufgenommen ist, welches Einrichtungen (33) für eine die Vorformkammer (22) beaufschlagende Gaszufuhr und Einrichtungen (34) für eine Beheizung der Vorformkammer aufweist.

19. Vorrichtung nach Anspruch 15, dadurch gekennzeichnet, daß eine verfahrbare, zur Kunststoffverarbeitungsmaschine (6) gehörende Düseneinrichtung (35) als Mittel zum unmittelbaren Zuführen der plastifizierten Kunststoffmasse in den offenen Formhohlraum (4) vorgesehen ist.

20. Vorrichtung nach Anspruch 15, dadurch gekennzeichnet, daß eine beheizte, durch die Plastifizierungseinrichtung (5) speisbare Kolben-Zylinder-Einrichtung (38), die mit einem freiprogrammierbaren Handhabungssystem (Roboter) verbunden ist, als Mittel zum unmittelbaren Zuführen der plastifizierten Kunststoffmasse in genau definierbarer Bahnablage in den offenen Formhohlraum (4) dient.

21. Vorrichtung nach Anspruch 15, dadurch gekennzeichnet, daß im Formwerkzeug (1) ein Trennmesser (20) integriert ist.

## Claims

1. Method for manufacturing a moulded plastics article having at least one decorative material web (15) in a mould (1) which has two mould halves (2, 3) and a mould cavity (4) between the mould halves (2, 3), in which method first of all the mould (1) is opened by separating the mould halves (2, 3) from each other, at least one decorative material web (15) is arranged between the mould halves (2, 3), the decorative material web (15) is held by a clamping frame, which is located outside the mould cavity (4) and comprises an upper clamping frame half (16) and a lower clamping frame half (7), and by a holding force which makes it possible for the decorative material web (15) to slip between the upper clamping frame half (16) and the lower clamping frame half (7), plasticized polymer composition is fed to the open mould cavity (4) and the mould (1) is closed by moving the mould halves (2, 3) towards each other in order to compress the plasticized polymer material within the mould cavity (4) in a moulding manner, characterized in that simultaneously with the closing of the mould halves (2, 3) the clamping frame is lowered and at the same time the lower clamping frame half (7) is moved into a clearance (47) of the lower mould half (2), surrounding the mould cavity (4), in order to prevent plasticized polymer composition from reaching the wall region (19) before the mould cavity (4) is closed while the said polymer composition is being compressed in a moulding manner.

2. Method according to Claim 1, characterized in that, during the closing of the mould halves (2, 3), the clamping frame is moved into the clearance (47) of the lower mould half (2) until the upper side of the lower clamping frame half (7) is at the same height as the wall of the cavity (13), in order to enlarge the mould cavity (4) beyond a subregion of the lower clamping frame half (7).

3. Method according to Claim 1 or 2, characterized in that two decorative material webs (15, 17) are arranged between the mould halves (2, 3) of the open mould (1) and a charge of the plasticized polymer composition is introduced between the decorative material webs and is then compressed in a moulding manner against the decorative material webs by closing the mould (1).

4. Method according to at least one of Claims 1 to 3, characterized in that the plasticized polymer composition is fed directly by a plasticizing device (5) of a plastics processing machine (6) to the open mould cavity (4).

5. Method according to at least one of Claims 1 to 3, characterized in that the plasticized polymer composition is fed by a plasticizing device (5) of a plastics processing machine (6) with an article-specific composition volume to a preforming chamber (22), the preforming chamber (22) is moved into the open mould cavity (4) and the plasticized polymer composition, preformed shaping-specifically for the distribution, is deposited here.

6. Method according to Claim 5, characterized in that a heated preforming chamber (22), keeping the plasticized polymer composition at melt temperature, is used.

7. Method according to Claim 5 or 6, characterized in that a preforming chamber (22) having a bottom wall (25, 27) to be opened and capable of being swung up is used.

8. Method according to at least one of Claims 5 to 7, characterized in that a preforming chamber (22) having a low adhesion with respect to the plasticized polymer composition is used.

9. Method according to at least one of Claims 5 to 8, characterized in that a preforming chamber (22) which has an inner surface (29) consisting of a metal oxide layer is used.

10. Method according to at least one of Claims 5 to 8, characterized in that a preforming chamber (22) which has an inner surface covering or coating of nonferrous metal is used.

11. Method according to at least one of Claims 5 to 8, characterized in that a preforming chamber (22) consisting of porous or air-permeable material, in particular sintered metal, is used.

12. Method according to Claim 11, characterized in that the preforming chamber (22) is opened and subjected to a gas supply for the depositing of the plasticized polymer composition.

13. Method according to at least one of Claims 1 to 4, characterized in that a heated cylinder with piston (38), which is fed by the plasticizing device (5) and is moved along by a freely programmed handling system (40), deposits the plasticized polymer composition in a precisely defined web in the opened mould position.

14. Method according to at least one of Claims 1 to 13, characterized in that single-ply or multi-ply, possibly foam-backed (46) or similarly laminated plastic films (42), woven or knitted fabrics, felts, leather or the like are used as decorative material webs.

15. Apparatus for carrying out the method according to Claims 1 to 14, having a mould (1), which comprises a lower mould half (2) and an upper mould half (3), which are movable relatively with respect to each other, and also a mould cavity (4) formed between the mould halves (2, 3), having a plastics processing machine (6), which has a plasticizing device (5), having means for feeding the plasticized polymer composition into the open mould cavity (4) and having at least one two-part clamping frame, comprising a lower clamping frame half (7) and an upper clamping frame half (16) for compliantly holding a decorative material web (15) arranged between the mould halves (2, 3), characterized in that in the lower mould half (2) there is formed a clearance (47), surrounding the cavity (13), for receiving the lower clamping frame half (7) during closing of the mould (1), which clearance has a vertically aligned wall (48) which runs parallel to the inner bounding wall (18) of the lower clamping frame half (7) and has a depth which corresponds at least to the height of the lower clamping frame half (7), in that there adjoins the inner bounding wall (18) of the lower clamping frame half (7) at the upper end a horizontal wall region of small width, which together with the upper mould half (3) completes the mould cavity (4) peripherally when the lower clamping frame half (7) has entered into the clearance (47), and serves as an ejector for the moulding plastics article, and in that there adjoins the horizontal wall region an arcuately downward-sloping wall region (19), against which a correspondingly shaped region of the upper mould half (3) can be supported, enclosing the decorative material web (15).

16. Apparatus according to Claim 15, characterized in that there is provided a heatable preforming chamber (22) having a feed opening (24) for the plasticized polymer composition as a means for feeding the plasticized polymer composition into the open mould cavity (4), which preforming chamber has a bottom wall (25, 27) to be opened.

17. Apparatus according to Claim 16, characterized in that the inner surface (29) of the preforming chamber (22) consists of a polished metal oxide layer or of nonferrous metal.

18. Apparatus according to Claim 16 or 17, characterized in that the preforming chamber (22) consists of a porous or gas-permeable material, in particular sintered metal, and is accommodated in a housing (30) which has devices (33) for a gas supply to which the preforming chamber (22) is subjected and devices (34) for a heating of the preforming chamber.

19. Apparatus according to Claim 15, characterized in that a movable nozzle device (35), belonging to the plastics processing machine (6), is provided as a means for directly feeding the plasticized polymer composition into the open mould cavity (4).

20. Apparatus according to Claim 15, characterized in that a heated piston-cylinder device (38), which can be fed by the plasticizing device (5) and is connected to a freely programmable handling system (robot), serves as a means for directly feeding the plasticized polymer composition in a precisely definable web deposition into the open mould cavity (4).

21. Apparatus according to Claim 15, characterized in that a cutting knife (20) is integrated in the mould (1).

## Revendications

1. Procédé pour fabriquer une pièce moulée en matière plastique comprenant au moins une feuille de matériau décoratif (15) dans un outil de moulage (1), qui comporte deux moitiés d'outil (2,3) avec entre elles une cavité de moule (4), l'outil de moulage (1) étant d'abord ouvert en séparant les deux moitiés d'outil (2,3), au moins une feuille de matériau décoratif (15) étant disposée entre les moitiés d'outil (2,3), la feuille de matériau décoratif (15) étant tenue avec un cadre de serrage qui se trouve à l'extérieur de la cavité de moule (4) et est constitué d'une moitié de cadre de serrage supérieure (16) et d'une moitié de cadre de serrage inférieure (7) assurant une force de maintien qui permet à la feuille de matériau décoratif (15) de glisser entre la moitié de cadre de serrage supérieure (16) et la moitié de cadre de serrage inférieure (7), une masse de matière plastique plastifiée étant amenée à la cavité de moule (4) ouverte, et l'outil de moulage (1) étant fermé en rapprochant l'une contre l'autre les moitiés d'outil (2,3), afin de mouler, en lui conférant sa forme, l'intérieur de la cavité de moule (4) la matière plastique plastifiée,
caractérisé en ce que
en même temps que se ferment les moitiés d'outil (2,3), le cadre de serrage est abaissé et, ce faisant, la moitié inférieure (7) de cadre de serrage pénètre dans un volume libre (47) de la moitié inférieure d'outil (2) entourant la cavité de moule (4), afin d'empêcher que la masse de matière plastique plastifiée, pendant qu'elle est moulée en recevant sa forme, atteigne la portion de paroi (19) avant que la cavité de moule (4) soit fermée.

2. Procédé selon la revendication 1, caractérisé en ce que, lors de la fermeture des moitiés d'outil (2,3), le cadre de serrage pénètre dans le volume libre (47) de la moitié inférieure d'outil (2) jusqu'à ce que le côté supérieure de la moitié inférieure (7) de cadre de serrage se trouve au même niveau que la paroi du volume creux (13) pour agrandir la cavité de moule (4) par dessus une zone partielle de la moitié inférieure (7) de cadre de serrage.

3. Procédé selon la revendication 1 ou 2, caractérisé en ce qu'on dispose entre les deux moitiés d'outil (2,3) de l'outil de moulage (1) ouvert deux feuilles de matériau décoratif (15,17) et qu'on introduit entre les feuilles de matériau décoratif une charge de la masse de matière plastique plastifiée, qui est ensuite moulée en recevant sa forme par la fermeture de l'outil de moulage (1) contre les feuilles de matériau décoratif.

4. Procédé selon l'une au moins des revendications 1 à 3, caractérisé en ce que la masse de matière plastique plastifiée est amenée directement à la cavité de moule (4) ouverte par un dispositif de plastification (5) d'une machine de traitement (6) des matières plastiques.

5. Procédé selon l'une au moins des revendications 1 à 3, caractérisé en ce que la masse de matière plastique plastifiée est amenée par un dispositif de plastification (5) d'une machine de traitement des matières plastiques (6), selon un volume de la masse spécifique à la pièce, à une chambre de préforme (22), que la chambre de préforme (22) est introduite dans la cavité de moule (4) ouverte et que la masse de matière plastique plastifiée, préformée selon les spécifications de déformation pour la répartition, y est déposée.

6. Procédé selon la revendication 5, caractérisé en ce qu'on utilise une chambre de préforme (22) chauffée, qui maintient la masse de matière plastique plastifiée à la température de masse.

7. Procédé selon la revendication 5, caractérisé en ce qu'on utilise une chambre de préforme (22) munie d'une paroi de fond (25,27) qu'on peut ouvrir, repliable par exemple .

8. Procédé selon l'une au moins des revendications 5 à 7, caractérisé en ce qu'on utilise une chambre de préforme (22) adhérant faiblement à la masse de matière plastique plastifiée.

9. Procédé selon l'une au moins des revendications 5 à 8, caractérisé en ce qu'on utilise une chambre de préforme (22) qui comporte une surface intérieure (29) constituée par une couche d'oxyde métallique.

10. Procédé selon l'une au moins des revendications 5 à 8, caractérisé en ce qu'on utilise une chambre de préforme (22) qui comporte une couche de surface du côté intérieur, ou un revêtement en métal lourd non ferreux.

11. Procédé selon l'une au moins des revendications 5 à 8, caractérisé en ce qu'on utilise une chambre de préforme (22) constituée par un matériau poreux et/ou perméable à l'air, notamment du métal fritté.

12. Procédé selon la revendication 11, caractérisé en ce que la chambre de préforme (22) est ouverte pour déposer la masse de matière plastique plastifiée et reçoit une alimentation en gaz.

13. Procédé selon l'une au moins des revendications 1 à 4, caractérisé en ce qu'un cylindre chauffé (38) avec un piston, qui est alimenté par le dispositif de plastification (5) et est transporté par un système de manipulation (40) à programmation libre, dépose la masse de matière plastique plastifiée, en position ouverte de l'outil, selon une trajectoire exactement définie.

14. Procédé selon l'une au moins des revendications 1 à 13, caractérisé en ce qu'on utilise comme feuilles de matériau décoratif des feuilles de matière plastique (42) nonocouches ou multicouches, doublées d'un dossier en mousse (46) ou l'analogue, des tissus, des tissus à mailles, des tricots, des feutres, du cuir ou l'analogue.

15. Dispositif pour mettre en oeuvre le procédé selon les revendications 1 à 14, comportant un outil de moulage (1) qui comprend une moitié d'outil inférieure (2) et une moitié d'outil supérieure (3) pouvant être déplacées l'une par rapport à l'autre; ainsi qu'une cavité de moule (4) réalisée entre les moitiés d'outil (2,3), comportant également un dispositif de traitement des matières plastiques (6) comprenant un dispositif de plastification (5), des moyens pour amener la masse de matière plastique plastifiés dans la cavité de moule (4) ouverte et au moins un cadre de serrage en deux parties, constitué par une moitié inférieure de cadre de serrage (7) et une moitié supérieure de cadre de serrage (16) pour maintenir élastiquement une feuille de matériau décoratif (15) disposée entre les moitiés d'outil (2,3).
caractérisé en ce que
dans la moitié d'outil inférieure (2) est réalisé un volume libre (47) entourant le volume creux (13), pour recevoir la moitié inférieure de cadre de serrage (7) lors de la fermeture de l'outil de moulage (1), lequel volume libre comporte une paroi (48) orientée verticalement, qui s'étend parallèlement à la paroi de délimitation intérieure (18) de la moitié inférieure de cadre de serrage (7) et a une profondeur correspondant au moins à la hauteur de la moitié inférieure (7) du cadre de serrage,
en ce qu'à la paroi intérieure de délimitation (18) de la moitié inférieure (7) du cadre de serrage se raccorde, du côté de l'extrémité supérieure, une portion de paroi horizontale de faible largeur qui, lorsque la moitié inférieure (7) du cadre de serrage plonge dans le volume libre (47), complète avec la moitié supérieure d'outil (3) la cavité de moule (4) du côté du bord et sert d'éjecteur pour la pièce moulée en matière plastique,
et en ce qu'à la portion de paroi horizontale se raccorde une portion de paroi (19) descendant en arrondi, contre laquelle peut s'appuyer une zone, de forme correspondante, de la moitié supérieure d'outil (3) en incluant la feuille de matériau décoratif (15).

16. Dispositif selon la revendication 15, caractérisé en ce qu'on prévoit une chambre de préforme (22) chauffable comportant une ouverture d'alimentation (24) pour la masse de matière plastique plastifiée, en tant que moyen pour amener la masse de matière plastique plastifiée dans la cavité de moule (4) ouverte, laquelle chambre de préforme comporte une paroi de fond (25,27) qui peut s'ouvrir.

17. Dispositif selon la revendication 16, caractérisé en ce que la surface (29) du côté intérieur de la chambre de préforme (22) est constituée par une couche d'oxyde métallique polie ou par un métal lourd non ferreux.

18. Dispositif selon la revendication 16 ou 17, caractérisé en ce que la chambre de préforme (22) est constituée par un matériau poreux et/ou perméable au gaz, notamment en métal fritté et qu'elle est logée dans un carter (30) qui comporte des dispositifs (33) pour une arrivée de gaz alimentant la chambre de préforme (22) et des dispositifs (34) pour chauffer la chambre de préforme (22).

19. Dispositif selon la revendication 15, caractérisé en ce qu'on prévoit un dispositif de buse (35) déplaçable, faisant partie de la machine de traitement des matières plastiques (6), en tant que moyen pour l'alimentation directe de la masse de matière plastique plastifiée dans la cavité de moule (4) ouverte.

20. Dispositif selon la revendication 15, caractérisé en ce qu'un ensemble cylindre-piston (38) pouvant être alimenté par le dispositif de plastification (6) et relié à un système de manipulation à programmation libre (robot), sert de moyen pour amener directement la masse de matière plastique plastifiée dans la cavité de moule (4) ouverte, selon une trajectoire exactement définie.

21. Dispositif selon la revendication 15, caractérisé en ce qu'un couteau de séparation (20) est intégré dans l'outil de moulage (1).
